# EUROPEAN PATENT APPLICATION

(11) **EP 4 650 833 A1**
(43) Date of publication of application: **19.11.2025**
(21) Application number: 24305760.1
(22) Date of filing: 16.05.2024
(51) Int. Cl.: G02B 1/04, B29D 11/00

(54) **METHOD OF PRODUCING AN OPTICAL MATERIAL THAT REDUCES OPTICAL SURFACE DEFECTS AND OPTICAL MATERIAL**

(71) Applicant: Essilor International, 94220 Charenton-Le-Pont (FR)
(72) Inventor: XIE, Cunfei, Shanghai, 201600 (CN); CHIPPAUX, Laurent, 10520 Bangkok (TH); LV, Hongyang, Shanghai, 201600 (CN); PAN, Chun, Shanghai, 201600 (CN)
(74) Representative: Jacobacci Coralis Harle

(57) **Abstract**

A method of producing an optical material comprising at least the following successive steps:
(A) preparing in a tank a polymerizable composition by stirring at least one monomeric compound and at least one initiator,
(B) performing a polymerization of said polymerizable composition in a polymerization device under a polymerization cycle including a plurality of phases comprising a first heating phase wherein the polymerization temperature is within the range from 20°C to 95°C for a first duration;
characterized in that step (8) comprises a second heating phase, carried out after the first heating phase, wherein the polymerization temperature is higher than or equal to 95°C and lower than 130°C for a second duration within the range from 30 minutes to 3 hours.

## Description

### TECHNICAL FIELD OF THE INVENTION

The invention relates to a method of producing an optical material that reduces optical defects and to the optical material obtained thereof.

### BACKGROUND INFORMATION AND PRIOR ART

It is known a method of producing an optical material wherein a polymerizable liquid composition that includes a mix of monomers and an initiator is first prepared, and is then poured and polymerized into a cavity formed between two parts of a suitable mold, such as a mineral glass mold, the assembly being held together by fixing means, for instance a tape. In general, the polymerization is performed under a polymerization cycle wherein the polymerization is induced (or initiated) by an increase in temperature. After the polymerization is achieved, the optical material is demolded. Especially, the fixing means are removed and the mold is dismantled to recover the optical material.

In general, such an optical material may be used as plastic material substrate for an optical article, such as an ophthalmic lens, especially spectacle lenses or sunglasses.

In the case of the ophthalmic lens, the polymerizable liquid compositions used vary widely, depending on the required refractive index of the ophthalmic lens. Many of these compositions, for example compositions based on acrylic or methacrylic monomers or a mixture of acrylic and/or methacrylic monomers, shrink significantly on polymerization, by an amount in the order of 6% or more, generally 7% or more, creating tensile stresses in the plastic lens substrate within the mold.

However, it has been observed that these internal stresses generated during the polymerization or curing, as well as uneven polymerization, may lead to inhomogeneity in the plastic structure of the lens substrates, such as random defects. These ones are especially visible when the lens substrates are subsequently coloured, for example by dipping them into an aqueous dispersion of pigments (i.e.: tinting step). Indeed, some coloured/tinted lens substrates, in particular lens substrates with a positive optical power, can in certain instances, result in an uneven tinting of the surface. This leads to visually observable defects on the tinted surface(s) of the plastic lens substrates, which are commonly referred due to their shape to as "ferns" or "moons".

In the case of tinted ophthalmic lenses, such as tinted ophthalmic lenses having a positive diopter, i.e., plus lenses, and non-corrective lenses, e.g., sunglasses, such fern defects often result in rejection and scrapping of the tinted lens.

So as to reduce the above-mentioned defects, several solutions have been developed in the prior art.

Document US 6 171 529 describes a method of releasing from a mold a transparent polymer material article formed in a cavity of a two-part mold by polymerizing a liquid polymerizable substance. In particular, the method includes:
a) uniformly heating said article in said mold to a mold release temperature in the range from Tg+20 °C to Tg +80°C, where Tg is the glass transition temperature of the transparent polymer material, without separating said article and said mold parts, and
b) applying an external mechanical force (by means of a tool operating in the manner of a lever on said mol part) to separate at least one of said mold parts from said article while it is at said mold release temperature (i.e.: Tg+30°C to Tg +60°C).

However, in this method, the two-part mold needs to be disassembled at a high temperature, which may bring scald risk.

In view of the foregoing issues, a solution to visually observable defects is desirable in order to avoid the economic loss that results from the scrapping of lens substrates having fern defects and hence, to get "qualified" lens substrate at a high yield.

Therefore, there is a need in the prior art to provide a new method of manufacturing an optical material that enables to reduce and/or prevent random defects (i.e.: "ferns" or "moons") that may occur on the surface of said optical material, without impairing the mechanical and optical properties of the optical material.

Especially, there is a need to provide a new method of manufacturing an optical material that can improve the optical quality of the obtained optical material, especially when this one has a positive optical power and/or is formed from substances which can significantly shrink on polymerization.

It is desirable that the method for manufacturing such optical material is simple, easy to implement and reproducible.

### SUMMARY OF THE INVENTION

For that purpose, the invention therefore relates to a method of producing an optical material comprising at least the following successive steps:
(A) preparing in a tank a polymerizable composition by stirring at least one monomeric compound and at least one initiator;
(B) performing a polymerization of said polymerizable composition in a polymerization device under a polymerization cycle including a plurality of phases comprising a first heating phase wherein the polymerization temperature is within the range from 20°C to 95°C for a first duration;
characterized in that:
- step (B) comprises a second heating phase, carried out after the first heating phase, wherein the polymerization temperature is higher than or equal to 95°C and lower than 130°C for a second duration within the range from 30 minutes to 3 hours.

According to the invention, the polymerization of the polymerizable composition forms a polymerized composition, also called "polymerizate" or "optical material".

Here, the method of the invention comprises the combination of specific conditions for forming the polymerizable composition and of specific conditions for performing the polymerization cycle. Due to these characteristics and as shown by the experimental part below, the claimed method enables to produce optical material that are substantially free from fern defects.

Notably, it has been observed that, thanks to the claimed method, the fern defects can impact from 0% to 4.8% of the obtained optical material versus 48.9% for the known method.

Other non-limiting and advantageous features of the method according to the invention, taken individually or in any technically possible combination, are given in the description hereafter.

The invention also deals with an optical material obtained by the method described above, wherein the optical material exhibits a refraction index ranging from 1.56 to 1.60.

The invention also relates to an optical lens comprising an optical material as described above.

Such optical lens is advantageously an ophthalmic lens.

### DETAILED DESCRIPTION OF EXAMPLES

### 1°) Definitions

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

In the following description, a range "from x to y" includes the limits x and y, unless it is specified "more than x", in which case x is excluded from the range, and/or "less than y" in which case y is excluded from the range.

As used herein, the rear (or the inner) face of the substrate is intended to mean the face which, when using the article (such as an ophthalmic lens), is the nearest from the wearer's eye. It is generally a concave face. On the contrary, the front face of the substrate, is the face which, when using the article, is the most distant from the wearer's eye. It is generally a convex face.

As used herein, the term "random defects" such as "fern-shape defects" or "moon-shape defects" and similar terms refer generally to a visually observable uneven distribution of dye over the surface of a tinted polymerizate, such as a tinted lens substrate. More particularly, tinting defects are often visually observable as lighter colored or untinted surface patterns, sometimes in the form of ferns or moons.

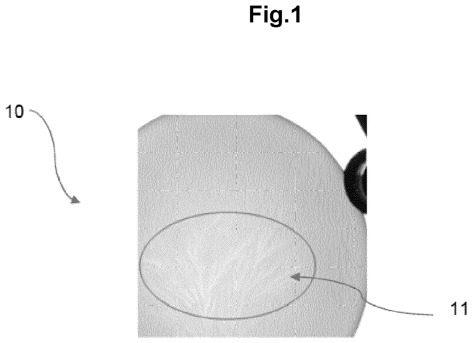

In particular, random defects in the form of ferns can be described with reference to Fig.1. This Fig.1 represents a colored plus lens substrate 10 having an optical power of +3.00D, prepared from acrylic monomers, and having fern-shape defects 11 thereon. Random defects in the form of moons (not shown in FIG. 1) are typically observed as a series of concentric circles of varying tint strength on the surface of the tinted lens. In some instance, a tinted lens substrate will exhibit a combination of both moon and fern type random defects.

The occurrence of random defects with optical material prepared from a polymerizable composition based on at least one monomeric compound, is a largely statistical phenomenon. Accordingly, in order to determine if a polymerizable composition can be used to prepare optical materials (in general, here lens substrate) that are "substantially free of random defects", more than one optical material, e.g., several lens substrates, should be prepared.

According to the invention, "the yield" corresponds to the percentage of optical material that are considered as qualified product after a manual vision inspection as compared to the total number of produced optical material (per batch), i.e.: the yield is obtained by dividing the number of qualified optical material with the total number of optical material that have been produced.

In addition, the unqualified optical material are also classified and counted. Therefore, a fern defects ratio (i.e.: number of optical materials having fern-shape defects: total number of optical material that have been produced ) can be measured.

In the case of ophthalmic lenses, typically between 10 and 100 lens substrates are prepared to determine if they are substantially free of random defects. Typically, a set of lens substrate, e.g., 100 ophthalmic plus lenses, prepared from a polymerizable composition according to the present invention, is considered to be substantially free of visually observable defects if 10 percent or less, preferably 5 percent or less, and more preferably 0 percent of the tinted optical materials have random defects such as ferns.

As used herein, by "plus lens" is meant a lens having a positive (+) diopter, i.e., a lens having a positive focal length or real focal point, for instance ranges from +0.25 to +6.00.

The expression "polymerization cycle" is commonly used in the field to designate the numerous steps to which is subjected the polymerizable composition in order to achieve its polymerization (i.e.: to for), therefore leading to a polymerized optical material. Such expression should not be understood as a "cycle" comprising successive steps that would repeat cyclically over time.

### 2°) Drawings

The following description with reference to the accompanying drawings will make it clear what the invention consists of and how it can be achieved. The invention is not limited to the embodiment illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 is a picture of a tinted lens having fern-shape defects;
- Figure 2 is a flow chart synthetizing the main steps of the method of the invention for producing an optical material from a polymerizable composition intended to polymerize.

### 3°) The method according to the invention

The applicant sought to develop a new method for producing optical material that significantly reduce the risk of visually observable random defects occurring during subsequent coloring of the obtained optical material, such as a lens substrate, and this without impairing the mechanical and optical properties of the optical material.

In particular, the Applicant has developed a new method for producing optical material that can help to reduce random defects especially for lens substrate having a positive optical power.

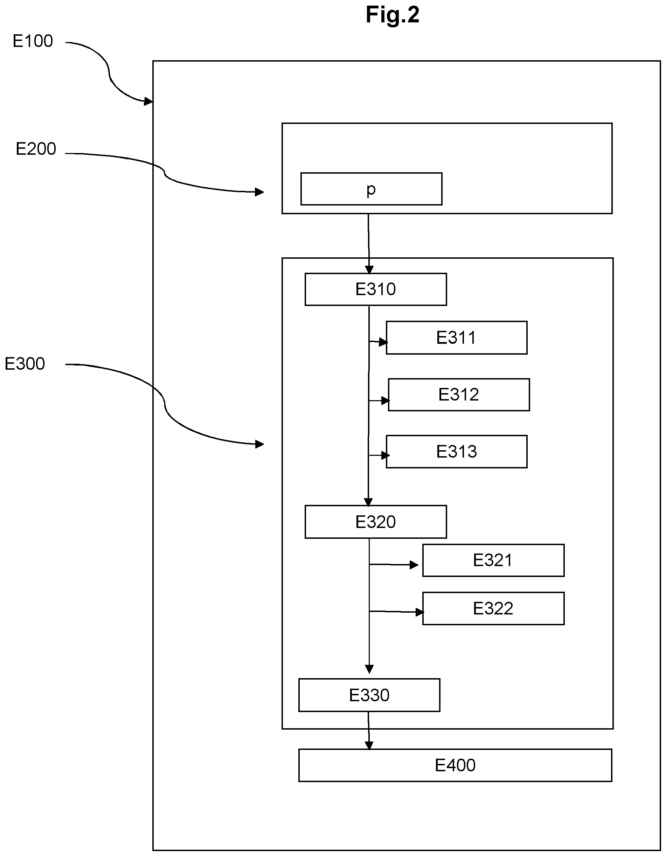

For that purpose and by referring to Fig.2, the invention relates to a method (step E100) of producing an optical material comprising at least the following successive steps:
(A) preparing in a tank a polymerizable composition (step E200) by stirring at least one monomeric compound and at least one initiator;
(B) performing a polymerization of said polymerizable composition (step E300) in a polymerization device under a polymerization cycle including a plurality of phases comprising a first heating phase wherein the polymerization temperature is within the range from 20°C to 95°C for a first duration;
characterized in that:
- step (B) comprises a second heating phase, carried out after the first heating phase, wherein the polymerization temperature is higher than or equal to 95°C and lower than 130°C for a second duration within the range from 30 minutes to 3 hours.

Hence, as mentioned above, the method of the invention comprises precise settings of various parameters, notably a specific combination of various parameters for the step of performing the polymerization (step E300). The Applicant has indeed discovered that specific conditions of the polymerization cycle E300, such as the relatively high temperature in the second heating step (i.e.: ranging from 95°C to 130°C), enable to reduce random defects that may occur on the surface of optical material.

The method of the invention allows a greater yield of qualified optical material, which is economically beneficial, while guaranteeing an easier demolding of the polymerized composition, without impairing the mechanical and optical properties of the optical material thereof obtained, as compared to a similar optical material produced from a known method.

In other words, the method of the invention provides a reduction of the random defects based on a conventional polymerizable composition that is however prepared in a specific manner in order to guarantee an adequate level of reticulation of the optical material (that is similar to the level of reticulation of an optical material obtained from a known method) and an easy dis-assembly of the polymerized composition from the mold in which it is polymerized.

The method of the invention results from a compromise between the reaction speed of the polymerization cycle (i.e.: faster reaction could lead to uncontrolled polymerization) and the ease of demolding of the polymerized composition, without impairing the final quality of the optical material.

According to the preferred embodiment described below, the optical material will correspond to a lens substrate.

### 3.1 °) Preparation of the polymerizable composition (step (A))

The first step E200 of preparing the polymerizable composition "p" will be described hereafter. As shown on Fig.2, the first step is typically achieved by mixing the components in appropriate proportions.

In an alternative embodiment, the polymerizable composition "p" may be formed prior to the implementation of the method of the invention, as long as said composition is still adapted to polymerize, but not polymerized yet when the polymerization cycle starts.

In general, the polymerizable composition "p" used in the method of the invention for producing a lens substrate comprises:
(i) at least one monomeric compound;
(ii) at least one initiator for initiating the polymerization of said at least monomeric compound;
(iii) optionally, a release agent;
(iv) optionally, additives.

In particular, the at least one monomeric compound (i) may correspond to acrylic or methacrylic monomers or a mixture of acrylic and/or methacrylic monomers adapted to polymerize to form (meth)acrylic substrate and/or allylic monomeric compounds adapted to polymerize to form an allylic substrate.

As used herein, the terms "acrylic" and "acrylate" are used interchangeably and include derivatives of acrylic acids, as well as substituted acrylic acids such as methacrylic acid, ethacrylic acid, thio(meth)acrylate compounds etc., unless indicated otherwise. The mixture of (meth)acrylic monomers can include mono- or poly-acrylate monomers, such as di-, tri-, tetra-, penta-, and hexa-acrylic monomers. Typically, the higher the functionality, the greater is the crosslink density. Additional co-polymerizable monomers, such as epoxy or isocyanate containing monomers, can also be present in the formulation used to prepare the polymerizable composition "p". Polymerizable monomeric compounds (i) combining polymerizable groups of different nature such as alkoxysilyl acrylates can also be employed.

The polymerizable composition "p" preferably comprises at least 50 % by weight of the at least one monomeric compound (i) that is preferably an acrylic-functional compounds, relative to the total weight of polymerizable compounds (i.e.: monomeric compounds) present in said composition. According to the invention "at least 50% by weight" includes the following values (%) and/or any intervals comprised between these values (limits included): 50; 55; 60; 65; 70; 75; 80; 85; 90; 95; and 100.

Typically, the monomeric compounds (i) represent 70wt% (or 700,000 ppm) or more, preferably 80wt% (or 800,000 ppm) or more, even more preferably around 90wt% (or 900,000 ppm) of the total weight of the polymerizable composition "p".

Examples of acrylic compounds that may be used as monomeric compound(s) (i) of the polymerizable composition "p" are:
- monofunctional (meth)acrylates: Allyl methacrylate, 2-ethoxyethyl acrylate, 2-ethoxyethyl methacrylate, caprolactone acrylate, isobornyl methacrylate, lauryl methacrylate, polypropylene glycol monomethacrylate, hydroxyethyl methacrylate.
- difunctional (meth)acrylates: 1,4-butanediol diacrylate, 1,4-butanediol dimethacrylate, 1,6-hexanediol diacrylate, 1,6-hexanediol dimethacrylate, ethoxylated bisphenol A diacrylate, polyethylene glycol di(meth)acrylates such as polyethylene glycol diacrylate, tetraethylene glycol diacrylate, polyethylene glycol dimethacrylate, polyethylene glycol diacrylate, tetraethylene glycol diacrylate, tripropylene glycol diacrylate, neopentyl glycol diacrylate, tetraethylene glycol dimethacrylate, diethylene glycol diacrylate.
- trifunctional (meth)acrylates: Trimethylolpropane trimethacrylate, Trimethylolpropane triacrylate, pentaerythritol triacrylate, ethoxylated trimethylolpropane triacrylate, trimethylolpropane trimethacrylate.
- tetra to hexa(meth)acrylates: Dipentaerythritol pentaacrylate, pentaerythritol tetraacrylate, ethoxylated pentaerythritol tetraacrylate, pentaacrylate esters.

The polymerizable composition "p" preferably comprises 10 to 95 % by weight of diacrylate compounds, more preferably 30 to 90 %, even more preferably 50 to 90 % by weight. The polymerizable composition "p" preferably comprises 0 to 20 % by weight of monoacrylate compounds, more preferably 1 to 10 %, even more preferably 2 to 8 % by weight. The polymerizable composition "p" preferably comprises 2 to 30 % by weight of triacrylate compounds, more preferably 5 to 25 %, even more preferably 5 to 20 % by weight. Higher functional acrylate materials, e.g., tetraacrylates, pentaacrylates, hexaacrylates and mixtures thereof can also be used in the formulation, such as in amounts of from 3 to 15 % by weight, particularly 5 to 10 % by weight. These weight percentages are relative to the total weight of polymerizable composition "p".

Advantageously, the at least one monomeric compound (i) comprises one or several epoxy acrylate compounds.

According to this embodiment, the epoxy acrylate compounds may be represented by the following formula (I) 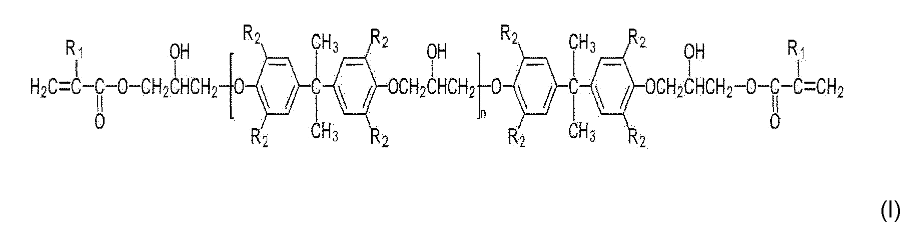 wherein n=0~15, R₁=H or CH₃, R₂=H or Br;
or formula (II) 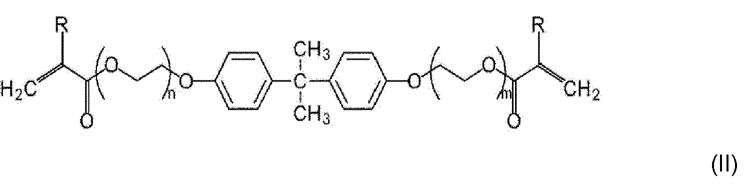 wherein m=0~15, n=0~15, R=H or CH₃.

According to a characteristic of the invention, the polymerizable composition "p" may comprise from 30 to 85% of the epoxy acrylate compounds of formula (I).

According to another characteristic of the invention, the polymerizable composition "p" may comprise from 5 to 50% of the epoxy acrylate compounds of formula (II).

Preferably, the polymerizable composition "p" comprises from 30 to 85% of the epoxy acrylate compounds of formula (I) and from 5 to 50% of the epoxy acrylate compounds of formula (II).

According to the invention a range "from 30 to 85" includes the following values (%) and/or any intervals comprised between these values (limits included): 30; 35; 40; 45; 50; 55; 60; 65; 70; 75; 80 and 85. Also, as used herein, a range "from 5 to 50" includes the following values (%) and/or any intervals comprised between these values (limits included): 5; 10; 15; 20; 25; 30; 35; 40; 45; and 50.

For instance, the monomeric compounds could be a mix of a 1.56 acrylic resin liquid raw material, such as SK 1.56, sold by Shi Ke Xin Cai.

The polymerizable composition "p" according to the invention also comprises at least one initiator for initiating the polymerization of said at least monomeric (ii). The initiator(s) (ii) can comprise one or more thermal polymerization initiating agents. Especially, the catalyst is a compound that helps starting the polymerization, and that eases the polymerization as it ensures a certain level of polymerization of the monomers. In practice, there could be one or more catalysts included in the polymerizable composition "p".

For instance, the at least one initiator (ii) may be selected from among: azodiisoheptanitrile (ABVN), azodiisobutyronitrile (AIBN), benzoyl peroxide (BPO), phenylacetyl peroxide, a peroxicarbonate, a peroxodicarbonate, a peroxyester or a perketal and their mixture. Preferably, said at least one initiator for initiating the polymerization is azodiisoheptanitrile (ABVN).

Generally, the at least one initiator is used in a proportion of 0.01 to 5% by weight with respect to the total weight of polymerizable composition "p".

The polymerizable composition "p" according to the invention may also comprise a release agent (iii).

Examples of compounds that may be used as release agent (iii) in the polymerizable composition "p" are: styrene, α- methylstyrene, divinylbenzene, benzyl methacrylate, chlorostyrene, bromostyrene, methoxystyrene, dimethyl maleate, dibutyl maleate, monobenzyl fumarate, dibenzyl fumarate, methyl benzyl maleate, dibutyl fumarate, monobutyl maleate, monopentyl maleate, dipentyl maleate, monopentyl fumarate, dipentyl fumarate, dipentyl fumarate, polyoxyethylene alkyl ether phosphate and its mixture.

Whatever its nature, the release agent included in the composition eases the demolding of the final polymerized composition (here the lens substrate). However, the more release agent is added to the composition, the more the quality of the final optical material risks to be altered, notably mechanically. Therefore, there is an optimum to find in the proportion of release agent to be comprised within the composition.

Typically, the release agent (iii) is used in a proportion of 5 to 50% by weight with respect to the total weight of polymerizable composition "p". According to the invention a range "from 5 to 50" by weight of release agent (iii) includes the following values (%) and/or any intervals comprised between these values (limits included): 5; 10; 15; 20; 25; 30; 35; 40; 45 and 50.

In addition to the above-described components, i.e.: the monomeric compound(s) (i), the initiator(s) (ii) and the optional release agent (iii), the polymerizable composition "p" can include other additives known to those skilled in the art, such as ultraviolet absorbers, organic dyes, inorganic pigments, antioxidants, light stabilizers, catalysts, etc. Such additives are particularly useful if the final optical material is to be used as an ophthalmic lens, in order to protect the corresponding eye of the wearer. These additives are well known from the skilled person and will not be detailed hereafter.

As mentioned above, the first step of preparing the polymerizable composition "p" E200 is typically achieved by mixing the components in appropriate proportions.

In particular, according to the invention, the different compounds (i), (ii) and where appropriate (iii) and (iv) included in the polymerizable composition "p" are mixed at specific conditions, such as the stirring time, the stirring speed and/or the polymerizable composition "p" discharging by weight.

According to a characteristic of the invention, the different compounds of the polymerizable composition "p" are mixed at a stirring time higher than or equal to 1.5 hours.

In general, the stirring time is higher than or equal to 2.0 hours, preferably higher than or equal to 2.5 hours, especially higher than or equal to 3.0 hours and typically higher than or equal to 3.5 hours. In particular, the stirring time is lower than or equal to 8.0 hours, especially lower than or equal to 7.0 hours and typically lower than or equal to 5.0 hours.

For instance, the stirring time is within the range from 2 hours to 8 hours, in particular, from 3.5 hours to 6 hours, and preferably from 4 hours to 5 hours.

According to an embodiment, step (A) is performed at a stirring time higher than or equal to 1.5 hours at a stirring speed higher than or equal to 25 rpm.

According to another characteristic of the invention, the different compounds of the polymerizable composition "p" are mixed at a stirring speed higher than or equal to 30 rpm.

As used herein, "a stirring speed higher than or equal to 30 rpm" includes the following values (in rpm) and and/or any intervals comprised between these values (limits included): 30; 35; 40; 45; 50; 55; 60; 65; 70; 75; 80; 85; 90; 95; 100; 105; 110; 115; 120; 125; 130; 135; 140; 145; 150; 155; 160; 165; 170; 180; etc.

The Applicant has discovered that playing on these different preparing monomer conditions for performing the claimed method enables to improve the quality of the final optical material, especially, in combination with the second heating phase of the polymerization step (B).

### 3.2°) Polymerization of the polymerizable composition E300

Once the polymerizable composition "p" is formed (E200 in figure 2), it is preferably injected into a mold of the polymerization device with known technics, such as a filling nozzle.

The mold delineates a piece of housing where the polymerizable composition "p" lies while it is subjected to the polymerization cycle. The contours of the housing delineated by the mold will give its final shape to the optical material, after the polymerizable composition "p" is polymerized and demolded.

By referring to Fig.2, once the polymerizable composition "p" lies within a mold, it is polymerized under the polymerization cycle of the invention (E300) that includes said plurality of steps, such as three (E310, E320 and E330) according to the embodiment described hereafter.

The steps of the polymerization cycle are described in terms of relative temperature and/or speed of temperature change, as well as duration. In the rest of the description, the temperature designates the temperature of the atmosphere surrounding the polymerizable composition "p" lying in its mold.

As mentioned above, the polymerization cycle includes a plurality of phases comprising at least:
- a first heating phase E310 wherein the polymerization temperature is within the range from 20°C to 95°C for a first duration; and
- a second heating phase E320, carried out after the first heating phase E310, wherein the polymerization temperature is higher than or equal to 95°C and lower than 130°C, preferably within the range from 95°C to 120°C and in particular within the range from 95°C to 115°C, for a second duration within the range from 30 minutes to 3 hours.

In general, the first heating phase E310 has a duration higher than or equal to 12 hours, preferably higher than or equal to 15 hours and typically higher than or equal to 18 hours. Also, generally, the first heating phase has a duration lower than or equal to 25 hours, preferably lower than or equal to 24 hours and typically lower than or equal to 23 hours.

For instance, the first heating phase E310 is within the range from 15 to 25 hours, especially from 17 to 23 hours and typically from 18 to 20 hours.

This first phase E310 comprises in general several steps.
In general, the first phase E310 comprises two main steps:
- a first sub-step (E311, E312) of increasing the polymerization temperature from 20°C to about 95°C during 12 to 22 hours, preferably from 15 to 20 hours and,
- a second sub-step (E313) of maintaining a constant polymerization temperature at 95°C for a duration ranging from 0.5 h to 2.5 h, preferably from 60 minutes to 2 hours.

Especially, as illustrated on Fig.2, the first sub-phase may itself comprise two sub-steps, such as the first phase E310 may comprise three subphases 311, 312 and 313 that will be described hereafter.

Such subphases of the first heating step E310 may include at least:
- a first subphase E311 of increasing the temperature from 20°C to about 40°C;
- a second subphase E312 of increasing the temperature from 40°C to a maximum temperature, named T_{max(E312)} that is ranged from 85°C to 95°C, and
- a third subphase E313 of maintaining the temperature to said T_{max(E312)}.

Preferably, the duration of theses subphase E311, E312 and E313 may be as follows:
- the first subphase E311 has a duration that is within the range from 2 to 7 hours;
- the second subphase E312 may correspond to an increase of temperature from 40°C to about T_{max(E312)} at a speed ranging from 4°C/hour to 9°C/hour and may have for instance a duration within the range from 10 to 15 hours;
- the third subphase E313 may have a duration that is lower than or equal to 3 hours.

More precisely, the first subphase E311 corresponds to a step of initialization of the polymerization. In practice, the first subphase of heating E311 is a step wherein the temperature changes from ambient temperature, that is to say approximately 25°C, to the temperature at which the polymerization is initiated, for instance at 35°C, 35.5°C, 36°C, 36.5°C, 37°C, 37.5°C, 38°C, 38.5°C, 39°C, 39.5°C or 40°C. The higher the temperature at which is initiated the polymerization, the faster (and therefore shorter) is the second E312 and the third subphases E313. However, such temperature at which is initiated the polymerization cannot be too high to ensure a high level of reticulation in the final polymerized composition.

After, this first heating step E310 wherein the polymerization is increased from 20°C to about 85-95°C, the polymerization cycle comprises a second heating step E320.

Traditionally, in the current polymerization cycle, the polymerization temperature does not exceed 80-95°C. However, the Applicant has surprisingly found that an additional increase of temperature from 95°C to 130°C enables to improve the optical and cosmetic properties of the obtained optical material. It is indeed essential that the polymerization cycle comprises said second heating step E320 wherein the polymerization temperature is further increased. Without to be linked to any theory, it would seem that this characteristic would result in an ease of the demolding of the polymerized composition and a satisfactory final optical material, notably in terms of both mechanical and optical properties, can be therefore obtained.

Generally, the polymerization temperature of the second heating phase E320 is within the range from 95°C to 120°C, in particular within the range from 95°C to 115°C.

In addition, this second heating phase E320 may have a duration within the range from 30 minutes to 2 hours, preferably within the range from 1h to 1.5 h.

In particular, the second heating phase E320 is composed of two successive subphases E321 and E322 respectively:
- a first subphase E321 wherein the polymerization temperature increases from above 95°C to 130°C, preferably from 95°C to 120°C and typically from 95°C to 115°C for a duration lower than or equal to 45 minutes preferably lower than or equal to 30 minutes and typically lower than or equal to 20 minutes;
- a second subphase E322 wherein the polymerization temperature is constant and is maintained to the highest temperature of the first subphase for a duration ranging from 30 minutes to 340 minutes, preferably ranging from 30 minutes to 200 minutes, in particular ranging from 40 minutes to 100 minutes and typically from 50 minutes to 80 minutes.

These two last heating subphases E321 and E322 wherein the polymerization temperature is higher than the usual one that is used for performing the current polymerization cycle, combined with the specific parameters used for preparing the polymerizable composition "p", enable to reduce random defects on the final optical material.

The Applicant has also observed that a third step E330, that is a cooling step, may help to reduce random defects.

Hence, the polymerization cycle may include a third cooling phase E330, carried out after the second phase E320 wherein the polymerization temperature is below the polymerization temperature used in the second heating phase E320 and decreases at a speed ranging from 20°C to 40°C/hour, preferably at a speed ranging from 25°C to 35°C/hour.

In general, during this cooling step E330, the polymerization temperature decreases from 110°C-130°C to 80-90°C for a duration lower than or equal to 2 hours.

Once the step of increasing the temperature (E310 and 3320) and the cooling step (E330) are over, the composition is considered to be polymerized.

After the end of the cooling step E330 of the polymerization cycle (E300), the polymerized composition clots and is easier to manipulate.

Once the polymerization cycle is over, that is to say after the cooling step (E330) of the polymerization cycle (E300), the polymerized composition is obtained and demolded E400.

According to the embodiment shown on Fig.2, such step of demolding is included within the method of the invention E100.

According to an alternative embodiment (not shown), the step of demolding could be implemented after the method of the invention is achieved.

To be demolded, the polymerized composition is pushed (or pulled) outside of the mold, and the optical material is therefore obtained. In practice, the optical material and the polymerized composition designate the same object, apart that the optical material designates the object outside of the mold, while the polymerized composition designates the object inside the mold. In other words, once the polymerized composition is demolded, it forms the final optical material.

Thanks to the method of the invention the demolding of the optical material is also eased, that is to say that the mean force necessary to separate the optical material from its mold is lower than the mean force necessary to separate a similar optical material obtained from a known method (or another method than that of the invention) from its mold.

In the present case, said mean force necessary to separate from its mold the optical material obtained from the method of the invention is lower than or equal to 1,600 Newton. Preferably, said mean force is lower than 1,500 Newton, even more preferably lower than 1,400 Newton. Notably, said mean force is lower than or equal to 1,400; 1,300; 1,200; 1,100; 1,000; 950; 900; 850; 800; 750; 700; 650; 600; 550; 500 and 450 Newton.

The method of the invention is particularly useful to obtain an optical material that exhibits a refraction index of 1.56.

### 4°) Optical material

The method of the invention is particularly useful to obtain an optical material that is an ophthalmic lens, more preferably a transparent ophthalmic lens.

### 5°) Examples

Several optical materials having the same polymerizable composition, but prepared differently have been tested.

The tested examples are as follows:

**Table 1**

| | **Polymerizable compositions (weight percent)** | | | | |
|---|---|---|---|---|---|
| | Monomer | Dye | Water | Release agent | Initiator |
| **CompEx.1** | SK 1.56 monomer | Blue Dye | DI Water | UB60 | ABVN |
| **CompEx.2** | | | | | |
| **CompEx.3** | | | | | |
| **Ex.1** | 100.0% | 0.18% | 0.01% | 0.14% | 0.17% |
| **Ex.2** | | | | | |
| **Ex.3** | | | | | |

The different polymerizable materials were prepared in a tank (magnetic stirring tank-10 Kg for the Lab tests and magnetic stirring tank-50 Kg for the scale tests) according to the conditions illustrated on Table 2. Then, once the different polymerizable compositions areprepared, they are injected thanks to a filling nozzle in a polymerization device (Filling nozzle-WKY-III-100, Lichen Instruments for both the lab tests and the scale tests).

In particular, the following optical materials have been tested:
- comparative example 1 according to the traditional current method;
- comparative examples 2 and 3 wherein the used parameters do not fall into the ones of the claimed method;
- examples 1 to 3 according to the claimed method.

Especially, the polymerization cycle for the traditional method (i.e.: comparative examples 1, 2 and 3) is as follows:
- first heating step wherein the polymerization temperature was increased from 25 to 40°C during 5.25 hours;
- a second heating step wherein the polymerization temperature was increased from 40°C to 95°C during 17.5 hours; and
- a third heating step wherein the polymerization temperature is maintained at 95°C during 1.5 hours; and
- a cooling step wherein the polymerization decreased from 95 to 80°C during 1.0 hour.

In addition, the polymerization cycle for examples 1 to 3 according to the invention is as follows:
- E311: a heating step wherein the polymerization temperature was increased from 25 to 40°C during 5.25 hours;
- E312: a heating step wherein the polymerization temperature was increased from 40°C to 95°C during 12.5 hours; and
- E313: a heating step wherein the polymerization temperature is maintained at 95°C during 1.5 hours;
- E321 : a heating step wherein the polymerization temperature was increased from 95°C to 110°C during 30 minutes or 60 minutes;
- E322: a heating step wherein the polymerization temperature is maintained at 110°C during 1 hour;
- E330: a cooling step wherein the polymerization decreased from 110 to 80°C during 1.0 hour.

The tested parameters and the results are summed up in Table 2 below.

As it is shown in the Table 2 below, the claimed essential parameter, that is to say: the step E321 during the polymerization cycle (choice of an additional heating subphase wherein the polymerization temperature is higher than the ones used during the traditional polymerization cycle), enables to reduce significantly the fern-shape defects.

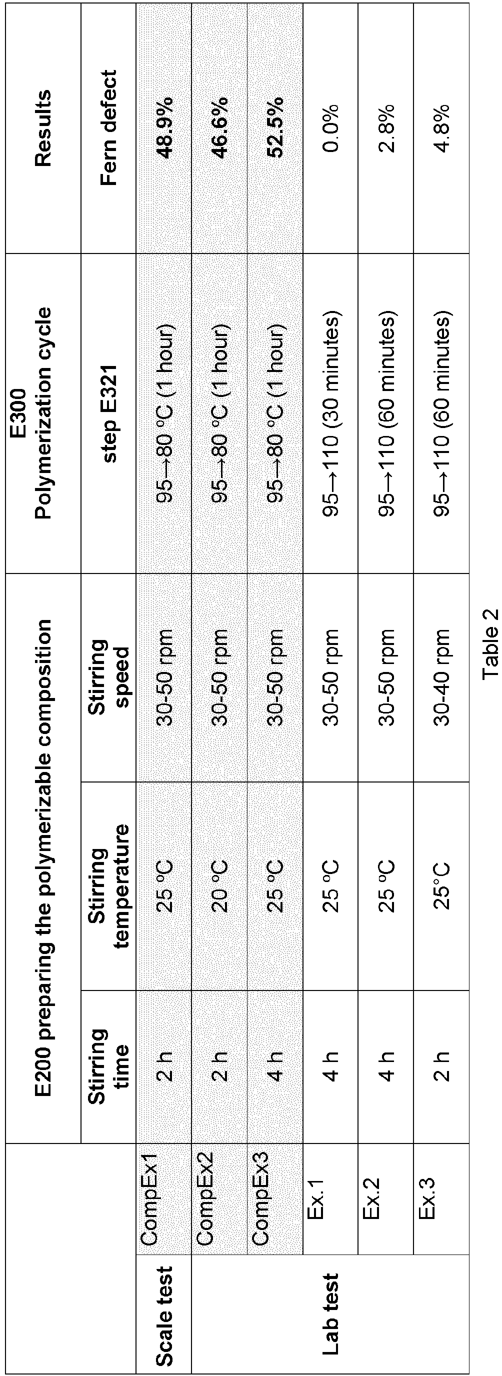

## Claims

1. A method of producing an optical material comprising at least the following successive steps:
(A) preparing in a tank a polymerizable composition by stirring at least one monomeric compound and at least one initiator,
(B) performing a polymerization of said polymerizable composition in a polymerization device under a polymerization cycle including a plurality of phases comprising a first heating phase wherein the polymerization temperature is within the range from 20°C to 95°C for a first duration;
**characterized in that** step (B) comprises a second heating phase, carried out after the first heating phase, wherein the polymerization temperature is higher than or equal to 95°C and lower than 130°C for a second duration within the range from 30 minutes to 3 hours.

2. Method according to claim 1, wherein at step (B), the polymerization temperature of the second heating phase is within the range from 95°C to 120°C, in particular within the range from 95°C to 115°C.

3. Method according to claim 1 or 2, wherein at step (B), the second heating phase has a duration within the range from 30 minutes to 2 hours, preferably within the range from 1h to 1.5 h.

4. Method according to any one of the preceding claims, wherein at step (B), the second heating phase is composed of two successive subphases:
- a first subphase wherein the polymerization temperature increases from above 95°C to 130°C, preferably from 95°C to 120°C and typically from 95°C to 115°C for a duration lower than or equal to 45 minutes, preferably lower than or equal to 30 minutes and typically lower than or equal to 20 minutes;
- a second subphase wherein the polymerization temperature is constant and is maintained to the highest temperature of the first subphase for a duration ranging from 30 minutes to 340 minutes, preferably ranging from 30 minutes to 200 minutes, preferably from 50 minutes to 80 minutes.

5. Method according to any one of the preceding claims, wherein step (B), comprises a third phase, that is a cooling phase, carried out after the second phase wherein the polymerization temperature is below the polymerization temperature used in the second heating phase and decreases at a speed ranging from 20°C to 40°C/hour, preferably at a speed ranging from 25°C to 35°C/hour.

6. Method according to any one of the preceding claims, wherein at step (B), the first heating phase comprises:
a first sub-step of increasing the polymerization temperature from 20°C to about 95°C during 12 to 22 hours, preferably from 15 to 20 hours and
a second sub-step of maintaining a constant polymerization temperature at 95°C for a duration ranging from 0.5 h to 2.5 h, preferably from 60 minutes to 2 hours.

7. Method according to any one of the preceding claims, wherein said step (A) is performed at a stirring time higher than or equal to 1.5 hours at a stirring speed higher than or equal to 25 rpm.

8. Method according to any one of the preceding claims, wherein step (A) is performed at a stirring time higher than or equal to 2 hours, preferably higher than or equal to 3 hours and typically higher than or equal to 3.5 hours.

9. Method according to any one of the preceding claims, wherein step (A) is performed at a stirring speed higher than or equal to 30 rpm.

10. An optical material obtained by a method comprising at least the following successive steps:
(A) preparing in a tank a polymerizable composition by stirring at least one monomeric compound and at least one initiator,
(B) performing a polymerization of said polymerizable composition in a polymerization device under a polymerization cycle including a plurality of phases comprising a first heating phase wherein the polymerization temperature is within the range from 20°C to 95°C for a first duration;
**characterized in that** step (B) comprises a second heating phase, carried out after the first heating phase, wherein the polymerization temperature is higher than or equal to 95°C and lower than 130°C for a second duration within the range from 30 minutes to 3 hours, wherein the optical material exhibits a refraction index ranging from 1.56 to 1.60.

11. An optical lens, wherein said optical lens comprises an optical material according to claim 10.

12. The optical lens according to claim 11, wherein said optical lens is an ophthalmic lens.
